# EUROPÄISCHE PATENTSCHRIFT

(11) **EP 4 379 198 B1**
(45) Veröffentlichungstag und Bekanntmachung des Hinweises auf die Patenterteilung: **21.05.2025**
(21) Anmeldenummer: 23211386.0
(22) Anmeldetag: 22.11.2023
(51) Int. Cl.: F01N 3/027, F01N 3/20

(54) **ABSTÜTZEINHEIT ZUR ABSTÜTZUNG EINES HEIZLEITERS EINES ABGASHEIZERS AN EINER TRÄGERSTRUKTUR**
SUPPORT UNIT FOR SUPPORTING A HEAT CONDUCTOR OF AN EXHAUST GAS HEATER ON A SUPPORT STRUCTURE
UNITÉ DE SUPPORT POUR SUPPORTER UN CONDUCTEUR DE CHAUFFAGE D'UN DISPOSITIF DE CHAUFFAGE DE GAZ D'ÉCHAPPEMENT SUR UNE STRUCTURE DE SUPPORT

(30) Priorität: 02.12.2022 DE 102022131967
(43) Veröffentlichungstag der Anmeldung: 05.06.2024
(73) Patentinhaber: Purem GmbH, 66539 Neunkirchen (DE)
(72) Erfinder: Brenner, Holger, Stuttgart (DE)
(74) Vertreter: Ruttensperger Lachnit Trossin Gomoll

(56) Entgegenhaltungen:
- EP-B1- 3 212 907
- WO-A1-2022/243381
- DE-A1- 102018 213 358
- DE-A1- 102020 125 698
- US-A1- 2014 290 229

## Beschreibung

Die vorliegende Erfindung betrifft eine Abstützeinheit zur Abstützung eines Heizleiters eines Abgasheizers an einer Trägerstruktur, einen mit wenigstens einer derartigen Abstützeinheit aufgebauten Abgasheizer und ein Verfahren zur Herstellung einer derartigen Abstützeinheit. Die Erfindung betrifft ferner eine mit einem derartigen Abgasheizer aufgebaute Abgasanlage.

Aus der DE 10 2020 123 376 A1 ist ein Abgasheizer für eine Abgasanlage einer Brennkraftmaschine bekannt, bei welcher ein im Wesentlichen scheibenartig aufgebauter und eine grundsätzlich mäanderartige Struktur aufweisender Heizleiter an einer Mehrzahl von Befestigungspunkten an einer Trägerstruktur getragen ist. Die Trägerstruktur umfasst stromaufwärts und stromabwärts des Heizleiters jeweils ein Trägerteil. Die beiden Trägerteile nehmen den Heizleiter zwischen sich auf und umschließen diesen radial außen. An den Befestigungspunkten sind zwischen jedem Trägerteil und dem Heizleiter mit Keramikmaterial aufgebaute Isolierelemente positioniert. Ein fester Zusammenhalt wird durch die Trägerteile, die Isolierelemente und den Heizleiter durchsetzende Schraubbolzen erreicht.

Die WO 2022/24338 A1 offenbart einen Abgasheizer, bei welchem ein wabenartig ausgebildeter Heizkörper vermittels einer Mehrzahl von Abstützeinheiten gemäß dem Oberbegriff des Anspruchs 1 an einer Trägerstruktur getragen ist.

Es ist die Aufgabe der vorliegenden Erfindung, eine Abstützeinheit zur Abstützung eines Heizleiter seines Abgasheizer an einer Trägerstruktur vorzusehen, mit welcher bei baulich einfacher Ausgestaltung eine stabile elektrisch isolierte Abstützung eines Heizleiters an einer Trägerstruktur erreicht wird.

Erfindungsgemäß wird diese Aufgabe gelöst durch eine Abstützeinheit zur Abstützung eines Heizleiters eines Abgasheizers an einer Trägerstruktur gemäß Anspruch 1. Die Abstützeinheit umfasst eine in Richtung einer Längsachse sich erstreckende und die Längsachse umgebende Stützhülse, einen Stützstift mit einem in der Stützhülse sich erstreckenden Hülsen-Verbindungsbereich und einem über die Stützhülse hervorstehenden Abgasheizer-Verbindungsbereich, wobei der Stützstift wenigstens im Bereich seines Hülsen-Verbindungsbereichs oder/und die Stützhülse an einer den Hülsen-Verbindungsbereich des Stützstifts umgebenden Innenoberfläche mit Isoliermaterial beschichtet ist, und wobei der Hülsen-Verbindungsbereich in der Stützhülse durch Kraftschluss gehalten ist.

Ein stabiler Kraftschluss zwischen der Stützhülse und dem Stützstift ist durch thermische Behandlung der Stützhülse oder/und des Stützstifts vor Einführen des Hülsen-Verbindungsbereichs in die Stützhülse bereitgestellt.

Hierzu wird vor Einführen des Hülsen-Verbindungsbereichs in die Stützhülse die Stützhülse erwärmt oder/und der Stützstift gekühlt.

Da bei einer erfindungsgemäß aufgebauten Abstützeinheit der Zusammenhalt der beiden eine Verbindung zwischen einem Heizleiter und einer Trägerstruktur herstellenden Bauteile, also die Stützhülse und der Stützstift, allein durch Kraftschluss und somit ohne den Einsatz zusätzlicher Bauteile fest und durch das Isoliermaterial elektrisch isoliert aneinander gehalten sind, wird ein einfacher, gegen mechanische, thermische und chemische Belastungen resistenter Aufbau erreicht.

Für eine einfach und auch kostengünstig herstellbare Ausgestaltung kann der Stützstift wenigstens in seinem Hülsen-Verbindungsbereich mit im Wesentlichen zylindrischer Außenumfangskontur ausgebildet sein, so dass insbesondere auch die Stützhülse als im Wesentlichen zylindrisches und somit einfach herstellbares Bauteil bereitgestellt werden kann.

Bei einer alternativen Ausgestaltung kann der Stützstift wenigstens ein seinem Hülsen-Verbindungsbereich, vorzugsweise in Richtung vom Abgasheizer-Verbindungsbereich weg, sich, vorzugsweise konisch, verjüngend ausgebildet sein, was das axiale Einführen dieser beiden Bauteile ineinander erleichtert.

Insbesondere bei dieser sich verjüngend in Struktur des Stützstifts kann zusätzlich der Kraftschluss durch axiales Einpressen des Hülsen-Verbindungsbereichs in die Stützhülle bereitgestellt sein.

Um einerseits durch das Isoliermaterial eine ausreichend starke elektrische Isolierung auch gegen vergleichsweise große elektrische Ströme zu erreichen, andererseits die durch den Kraftschluss bereitgestellte strukturelle Festigkeit nicht zu beeinträchtigen, kann das Isoliermaterial eine Schichtdicke im Bereich von 0,01 mm bis 0,1 mm aufweisen. Mit einer derartigen dünnen Beschichtung mit dem Isoliermaterial wird gleichzeitig auch eine sehr geringe thermische Masse der gesamten Abstützeinheit erreicht.

Wenn das Isoliermaterial mit Keramikmaterial aufgebaut ist, wird eine sehr gute elektrische Isolierung bei gleichermaßen sehr guter thermischer und chemischer Resistenz des Isoliermaterials erreicht.

Um das Isoliermaterial gegen äußere Einwirkung insbesondere durch eine Abgasanlage durchströmendes Abgas möglichst effizient abzuschirmen, wird vorgeschlagen, dass das Isoliermaterial an wenigstens einem axialen Ende der Stützhülse nicht axial über die Stützhülse hervorsteht.

Zum Vermeiden von Kriechströmen kann das Isoliermaterial wenigstens an einem dem Abgasheizer-Verbindungsbereich zugewandten axialen Ende der Stützhülse axial über die Stützhülse hervorstehen.

Wenn der Stützstift und die Stützhülse mit Metallmaterial aufgebaut sind, wird ein thermisch, mechanisch und chemisch resistenter Aufbau unterstützt und gleichzeitig die Möglichkeit bereitgestellt, den Stützstift und die Stützhülse materialschlüssig, beispielsweise durch Verschweißen, an den Heizleiter bzw. Trägerstruktur anzubinden.

Die Erfindung betrifft ferner Verfahren zur Herstellung einer erfindungsgemäßen Abstützeinheit, wobei zur kraftschlüssigen Verbindung der Stützhülse mit dem Stützstift vor dem Einführen des Hülsen-Verbindungsbereichs in die Stützhülse die Stützhülse erwärmt wird oder/und der Stützstift gekühlt wird. Damit nutzt die vorliegende Erfindung den Effekt, dass durch Erwärmen der Stützhülse diese sich zunächst ausdehnt und beim nachfolgenden Abkühlen den in diese dann bereits eingeführten Stützstift fest umgreift bzw. mit ihrer Innenoberfläche zur Herstellung eines stabilen Reibschlusses fest gegen eine Außenoberfläche des Stützstifts gepresst wird. Entsprechendes kann dadurch erreicht werden, dass der Stützstift vor dem Einführen in die Stützhülse gekühlt wird, so dass dieser sich zusammenzieht und bei der bei einer nachfolgenden Erwärmung wieder auftretenden Ausdehnung mit seiner Außenoberfläche zur Herstellung eines festen Reibschlusses gegen die Innenoberfläche der Stützhülse gepresst wird.

Dabei ist es besonders vorteilhaft, wenn die Stützhülse auf eine Temperatur über einer an einem Abgasheizer maximal auftretenden oberen Grenztemperatur erwärmt wird oder/und der Stützstift auf eine Temperatur unter einer an einem Abgasheizer maximal auftretenden unteren Grenztemperatur gekühlt wird. Die obere Grenztemperatur ist eine Temperatur, welche bei einem in eine Abgasanlage integrierten Abgasheizer insbesondere im Betrieb desselben im Allgemeinen nicht erreicht oder überschritten wird. Gleichermaßen ist die untere Grenztemperatur eine Temperatur, welche bei einem in eine Abgasanlage integrierten Abgasheizer beispielsweise bei sehr niedrigen Umgebungstemperaturen im Allgemeinen nicht unterschritten wird. Somit kann sichergestellt werden, dass nach Integration eines derartigen Abgasheizers in eine Abgasanlage durch äußere Einflüsse keine derartige Abkühlung oder Erwärmung einer Abstützeinheit entsteht, welche dazu führen könnte, dass die durch thermische Konditionierung herbeigeführte kraftschlüssige bzw. reibschlüssige Verbindung wieder aufgehoben wird.

Die Erfindung betrifft ferner einen Abgasheizer für eine Abgasanlage einer Brennkraftmaschine, umfassend eine Trägerstruktur und wenigstens einen vermittels wenigstens einer erfindungsgemäß aufgebauten Abstützeinheit an der Trägerstruktur getragenen Heizleiter.

Für eine stabile Struktur kann die wenigstens eine Abstützeinheit, vorzugsweise mit ihrer Stützhülse, an der Trägerstruktur materialschlüssig, vorzugsweise durch Verschweißen, festgelegt sein und, vorzugsweise mit ihrem Stützstift, an dem wenigstens einen Heizleiter materialschlüssig, vorzugsweise durch Verschweißen, festgelegt sein.

Die Erfindung betrifft ferner eine Abgasanlage mit wenigstens einem erfindungsgemäß aufgebauten Abgasheizer.

Die vorliegende Erfindung wird nachfolgend mit Bezug auf die beiliegenden Figuren detailliert beschrieben. Es zeigt:
- Fig. 1: einen Abschnitt eines Abgasheizers für eine Abgasanlage einer Brennkraftmaschine;
- Fig.2: den Abgasheizer der Fig. 1 in Blickrichtung II in Fig. 1;
- Fig. 3: eine Längsschnittansicht einer einen Heizleiter mit einer Trägerstruktur eines Abgasheizer verbindenden Abstützeinheit;
- Fig. 4: eine der Fig. 1 entsprechende Ansicht einer alternativen Ausgestaltungsart einer Abstützeinheit;
- Fig. 5: eine prinzipartige Darstellung einer Abgasanlage mit einem Abgasheizer.

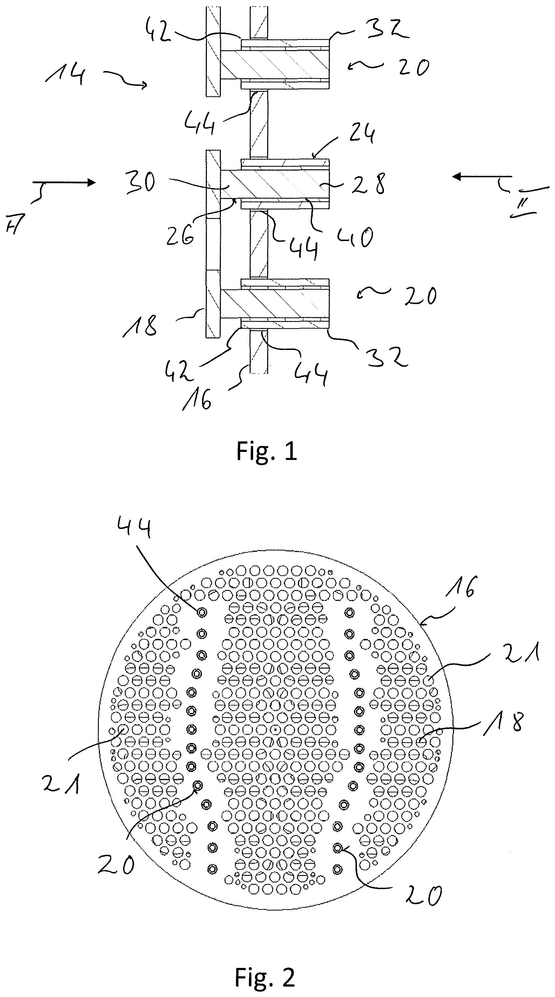

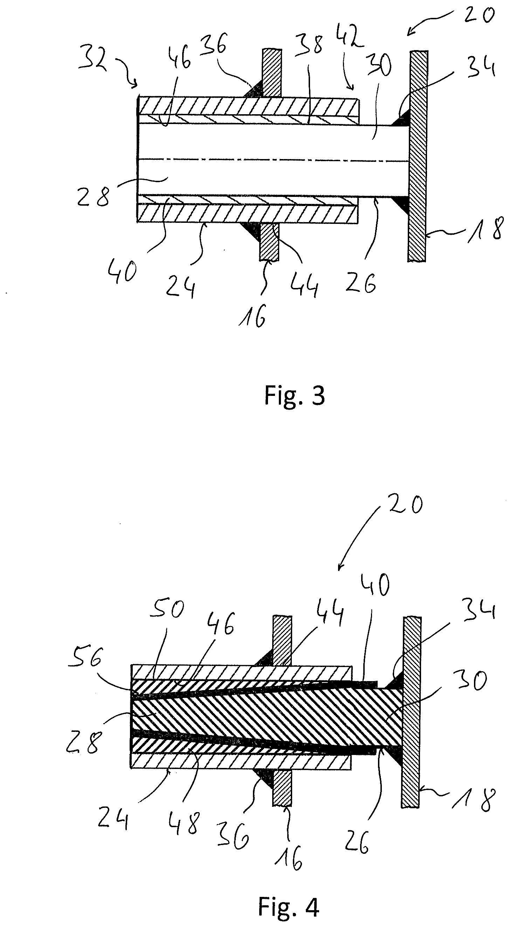

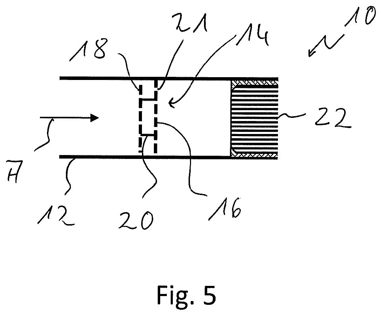

Bevor nachfolgend mit Bezug auf die Fig. 1-4 der Aufbau einer Abstützeinheit zur Abstützung eines Heizleiters an einer Trägerstruktur eines Abgasheizers detailliert beschrieben wird, wird zunächst mit Bezug auf die Fig. 5 der grundsätzliche Aufbau einer einen derartigen Abgasheizer enthaltenden Abgasanlage 10 erläutert.

Die Abgasanlage 10 umfasst ein beispielsweise rohrartig ausgebildetes Abgasführungselement 12, in welchem Abgas A in einer Abgas-Hauptströmungsrichtung strömt. Ein in der Abgasführungskomponente 12 angeordneter Abgasheizer 14 umfasst eine beispielsweise als Blechumformteil bzw. Blechstanzteil ausgebildete, plattenartige Trägerstruktur 16, die in ihrem Außenumfangsbereich an eine Innenoberfläche der Abgasführungskomponente 12 beispielsweise durch Materialschluss, beispielsweise Verschweißen, angebunden ist. An der Trägerstruktur 12 ist ein beispielsweise durch Heraustrennen aus einem Flachmaterial beispielsweise mit mäanderartig oder spiralartig gewundener Struktur ausgebildeter Heizleiter 18 durch eine Mehrzahl von Abstützeinheiten 20 fest getragen. Durch Anlegen einer elektrischen Spannung an Anschlussenden des Heizleiters 18 wird dieser durch den diesen durchfließenden elektrischen Strom auf eine Temperatur beispielsweise von mehreren 100 °C erwärmt. Die im Heizleiter 18 generierte Wärme kann auf das diesen und auch die Trägerstruktur 16 im Bereich von darin ausgebildeten Durchströmöffnungen 21 durchströmende Abgas A übertragen werden. Das im Bereich des Abgasheizers 14 erwärmte Abgas A strömt weiter in Richtung zu einer allgemein mit 22 bezeichneten Abgasbehandlungseinheit. Diese kann beispielsweise als Katalysator, wie z. B. Oxidationskatalysator, SCR-Katalysator oder dergleichen, oder als Partikelfilter ausgebildet sein.

Durch das Erwärmen des beispielsweise bei vergleichsweise niedrigen Außentemperaturen oder am Beginn des Arbeitsbetriebs einer Brennkraftmaschine eine vergleichsweise niedrige Temperatur aufweisenden Abgases A wird die Möglichkeit geschaffen, die stromabwärts des Abgasheizers 14 positionierte Abgasbehandlungseinheit 22 schneller auf die für diese erforderliche Betriebstemperatur zu bringen bzw. zuverlässig auf einer derartigen Betriebstemperatur zu halten. Insbesondere besteht auch die Möglichkeit, vor Inbetriebnahme der Brennkraftmaschine am Abgasheizer 14 ein anderes durch die Abgasführungskomponente 12 geleitetes Gas, beispielsweise Luft, zu erwärmen und die auf dieses Gas übertragene Wärme dann zur thermischen Konditionierung der Abgasbehandlungseinheit 22 bereits vor Inbetriebnahme der Brennkraftmaschine zu nutzen.

In den Fig. 1-3 ist eine Ausgestaltungsform einer derartigen in dem Abgasheizer 14 genutzten Abstützeinheit 20 detailliert dargestellt. Die Abstützeinheit 20 umfasst eine in Richtung einer Längsachse L langgestreckte Abstützhülse 24. Die Abstützhülse 24 weist im dargestellten Ausgestaltungsbeispiel eine zylindrische, beispielsweise kreisrunde Querschnittsgeometrie, insbesondere Innenquerschnittsgeometrie, auf und ist vorzugsweise mit Metallmaterial aufgebaut.

In der Abstützhülse 24 ist ein Abstützstift 26 mit einem Hülsen-Verbindungsbereich 28 desselben aufgenommen. Mit einem über die Abstützhülse 24 hervorstehenden Abgasheizer-Verbindungsbereich 30 ist der Abstützstift 26 im dargestellten Ausgestaltungsbeispiel am Heizleiter 18 festgelegt.

Die Abstützhülse 24 ist in einem Bereich zwischen einem vom Abgasheizer-Verbindungsbereich 30 abgewandten axialen Ende 32 und einem dem Abgasheizer-Verbindungsbereich 30 zugewandten axialen Ende 42 liegenden Abschnitt, in welchem die Stützhülse 26 eine zugeordnete Öffnung 44 in der in Fig. 2 dargestellten plattenartigen Trägerstruktur 16 durchsetzt, an der Trägerstruktur 14 festgelegt. Sowohl die Festlegung des Stützstifts 26 am Heizleiter 18, als auch die Festlegung der Stützhülse 24 an der Trägerstruktur 14 kann durch eine jeweilige Verschweißung 34, 36 erfolgen. Hierfür können verschiedene Schweißverfahren, wie z. B. Laserschweißen, MAG-Schweißen, WIG-Schweißen oder dergleichen eingesetzt werden. Auf diese Art und Weise wird ein gegen mechanische und thermische Belastungen und auch gegen das den Abgasheizer 14 durchströmende Abgas chemisch resistente Verbindung der Abstützeinheit 02 sowohl mit dem Heizleiter 18, als auch der Trägerstruktur 14 gewährleistet.

Zur elektrischen Isolierung des Heizleiters 18 bezüglich der gleichermaßen mit Metallmaterial aufgebauten Trägerstruktur 14 ist beispielsweise an einer Außenoberfläche 38 des Stützstifts 26 im Hülsen-Verbindungsbereich 28 desselben eine Beschichtung mit Isoliermaterial 40 vorgesehen. Das Isoliermaterial 40 kann vorzugsweise mit Keramikmaterial aufgebaut sein und beispielsweise in Form einer Lackbeschichtung oder Bedampfung mit einer Schichtdicke im Bereich von 0,01 mm bis 0,1 mm aufgebracht sein.

Das Isoliermaterial 40 steht sowohl an dem vom Abgasheizer-Verbindungsbereich 30 abgewandten axialen Ende 32 der Stützhülse 24, als auch dem dem Abgasheizer-Verbindungsbereich 42 zugewandten axialen Ende der Stützhülse 24 nicht über diese hervor, sondern endet vorzugsweise bündig mit dieser. An diesen beiden axialen Enden 32, 42 der Stützhülse 24 liegt das Isoliermaterial 40 somit nur mit einer sehr kleinen, ringartigen Stirnfläche nach außen frei und kann somit nur in diesem Bereich in Kontakt mit dem die Abstützeinheit 20 umströmenden Abgas kommen. Dies schützt das Isoliermaterial 40 zusätzlich gegen äußere Einflüsse, insbesondere das chemisch aggressive Abgas A.

Alternativ oder zusätzlich zum Beschichten des Stützstifts 26 mit dem Isoliermaterial 40 könnte auch an einer Innenoberfläche 46 der Stützhülse 24 derartiges Isoliermaterial beispielsweise in Form einer Lackbeschichtung oder durch Aufdampfen oder dergleichen aufgebracht sein.

Um eine stabile Verbindung zwischen der Stützhülse 24 und dem Stützstift 26 zu erreichen, ohne hierfür zusätzliche zu einem Materialschluss oder einem Formschluss führende Mittel einsetzen zu müssen, ist bei der Abstützeinheit 20 der Stützstift 26 in der Stützhülse 24 allein durch Kraftschluss, also Reibschluss, gehalten. Bei der in Fig. 1 dargestellten Ausgestaltung, bei welcher die Stützhülse eine im Wesentlichen zylindrische Innenoberfläche 26 aufweist und der Stützstift 26 eine im Wesentlichen zylindrische Außenoberfläche 38 aufweist, wird dieser Kraftschluss durch thermische Behandlung der Stützhülse 24 oder/und des Stützstifts 26 vor dem ineinander Einführen dieser beiden Bauteile erreicht. Beispielsweise kann die Stützhülse 24 erwärmt werden, so dass diese sich ausdehnt und der Stützstift 26 zunächst im Wesentlichen ohne wesentlichen Reibkontakt mit der am Hülsen-Verbindungsbereich 28 bereits vorgesehenen Beschichtung mit dem Isoliermaterial 40 in die Stützhülse 24 eingeführt werden kann. Beim nachfolgenden Abkühlen zieht die Stützhülse 24 sich zusammen und presst mit ihrer Innenoberfläche 26 fest und über die gesamte Fläche im Wesentlichen gleichmäßig gegen die Außenoberfläche 38 des Stützstifts 26 bzw. das daran vorgesehene Isoliermaterial 40. Somit wird eine lokale Überbelastung insbesondere des Isoliermaterials 40 zuverlässig vermieden. Um zu gewährleisten, dass auch bei im Betrieb einer Abgasanlage 10 bzw. des Abgasheizers 14 und der dabei auftretenden Erwärmung auch der Abstützeinheit 20 diese kraftschlüssige Verbindung nicht aufgehoben wird, wird die Stützhülse 24 bei dieser thermischen Behandlung vorzugsweise auf eine Temperatur erwärmt, welche über der Temperatur liegt, die der Abgasheizer 14 bzw. der Heizleiter 18 desselben im Betrieb der Abgasanlage 10 maximal erreichen kann.

Bei einer zusätzlichen oder alternativ vorzunehmenden thermischen Behandlung kann vor dem Einführen des Stützstifts 26 in die Stützhülse 24 der Stützstift 26 abgekühlt werden, vorzugsweise auf eine Temperatur, die unter einer Temperatur liegt, welcher der Abgasheizer 14 und die daran vorgesehene Abstützeinheit 20 maximal ausgesetzt wird. Hier sind als unter der Grenztemperaturen somit insbesondere sehr niedrige Umgebungstemperaturen zu berücksichtigen, welche im Bereich von -30°C bis -40°C liegen können. Nach einem derartigen Abkühlen des Stützstifts 26 kann dieser mit der daran bereits vorgesehenen Beschichtung mit Isoliermaterial 40 in die Stützhülse 24 in dem gewünschten Ausmaß eingeführt und nachfolgend wieder auf Umgebungstemperatur erwärmt werden, so dass durch das dann auftretende Ausdehnen des Stützstifts 26 dieser mit der an seiner Außenoberfläche 38 vorgesehenen Beschichtung aus Isoliermaterial 40 fest und gleichmäßig gegen die Innenoberfläche 46 der Stützhülse 24 presst.

Um mit dieser thermischen Behandlung beim Verbinden der Stützhülse 24 mit dem Stützstift 26 zu gewährleisten, dass nach Herstellung der Verbindung auch unter Berücksichtigung der in einem Fahrzeug auftretenden thermischen Beaufschlagung einer derartigen Abstützeinheit 20 ein stabiler Zusammenhalt der Stützhülse 24 mit dem Stützstifte 26 beibehalten bleibt, sind vorzugsweise die Stützhülse 24 mit ihr Innenabmessung und der Stützstift 26 mit seiner Außenabmessung so aufeinander abgestimmt, dass nur nach dieser thermischen Behandlung, also nach Erwärmung der Stützhülse 24 oder/und Abkühlung des Stützstifts 26, der Stützstift 26 mit möglichst geringem radialem Bewegungsspiel in die Stützhülse 24 eingeführt werden kann.

Da auch beim Verbinden der Abstützeinheit 20 mit dem Heizleiter 18 bzw. der Trägerstruktur 14 beispielsweise durch Verschweißen die Abstützeinheit 20 nicht in derartigem Ausmaß erwärmt wird, dass durch die dabei auftretende thermisch bedingte Formänderung insbesondere der Stützhülse 24 eine wesentliche Beeinträchtigung des Kraftschlusses auftritt, besteht auch nicht die Gefahr, dass bei Herstellung der Verschweißungen 34, 36 eine zu einem undefinierten Verbindungszustand führende Relativbewegung zwischen dem Stützstift 26 und der Stützhülse 24 auftreten kann. Auch der Umstand, dass für die Stützhülse 24 und den Stützstift 26 unterschiedliche Materialien, insbesondere Metallmaterialien, mit zueinander verschiedenen thermischen Ausdehnungskoeffizienten eingesetzt werden können, beeinträchtigt bei derartiger durch thermische Behandlung herbeigeführter Verbindung die strukturelle Festigkeit der Abstützeinheit 20 nicht.

Eine alternative Ausgestaltungsart einer derartigen Abstützeinheit 20 ist in Fig. 2 dargestellt. Bei dieser Ausgestaltungsart ist der Stützstift 26 insbesondere in seinem Hülsen-Verbindungsbereich 28 mit in Richtung vom Abgasheizer-Verbindungsbereich 30 weg sich vorzugsweise konisch verjüngender Querschnittsgeometrie ausgebildet. Entsprechend ist die Stützhülse 24 mit in Richtung vom axialen Ende 42 zum axialen Ende 32 abnehmender Querschnittsfläche ausgebildet. Dies kann beispielsweise dadurch bereitgestellt sein, dass in die grundsätzlich mit zylindrischer Querschnittsgeometrie ausgebildete Stützhülse 24 ein hülsenartiges Einsatzteil 48 eingesetzt wird, das an seiner Außenumfangsfläche 50 eine der Innenquerschnittsgeometrie der Stützhülse 24 angepasste zylindrische Struktur aufweist und an seiner Innenseite eine an die beispielsweise konische Querschnittsgeometrie bzw. konisch sich verjüngende Struktur des Stützstifts 26 angepasste entsprechend in axialer Richtung sich verjüngende Innenoberfläche 56 aufweist. Beispielsweise kann dieses Einsatzteil 48 auch mit Metallmaterial aufgebaut sein. Bei einer alternativen Ausgestaltungsart kann die in axialer Richtung konisch sich verjüngende Innenquerschnittsgeometrie direkt an der Innenoberfläche 46 der Stützhülse 24 bereitgestellt sein. Bei einer weiteren alternativen Ausgestaltungsart könnte die konisch sich verjüngende Struktur auch so bereitgestellt sein, dass eine Querschnittsabnahme des Stützstifts 26 in Richtung zu dem von der Stützhülse 24 nicht umgebenen Abgasheizer-Verbindungsbereich 30 vorgesehen ist.

Auch bei der in Fig. 2 dargestellten Ausgestaltungsform kann das Isoliermaterial 40 auf die Außenoberfläche 38 des Stützstifts 26 beispielsweise durch Aufbringen einer Lackbeschichtung oder durch Aufdampfen oder dergleichen aufgebracht sein. Man erkennt in Fig. 2, dass am axialen Ende 42 der Stützhülse 24 das Isoliermaterial 40 axial hervorsteht und sich bis in den Bereich des von der Stützhülse 24 nicht umgebenen, beispielsweise mit im Wesentlichen zylindrischer Außenumfangsstruktur ausgebildeten Abgasheizer-Verbindungsbereichs 30 erstreckt. Somit kann ein zuverlässiger Schutz auch gegen Kriechströme zwischen dem Abgasheizer-Verbindungsbereich 30 und dem axialen Ende 42 der Stützhülse 24 erreicht werden. Um auch am axialen Ende 32 der Stützhülse 24, an welchem im dargestellten Ausgestaltungsbeispiel der Stützstift 26 mit seinem Hülsen-Verbindungsbereich 28 im Wesentlichen bündig mit der Stützhülse 24 endet, das Auftreten von Kriechströmen zwischen dem Stützstift 26 und der Trägerstruktur 14 zu vermeiden, kann auch im Bereich des axialen Endes 32 der Stützstift 26 axial über die Stützhülse 24 hervorstehen und an seinem über die Stützhülse 24 hervorstehenden Abschnitt mit dem Isoliermaterial 40 beschichtet sein. Es ist darauf hinzuweisen, dass eine derartige Struktur selbstverständlich auch bei der in Fig. 1 dargestellten Ausgestaltungsform realisiert sein kann.

Zur festen Verbindung des zumindest in seinem Hülsen-Verbindungsbereich 28 sich verjüngend ausgebildeten Stützstifts 26 mit der Stützhülse 24 kann der Stützstift 26 beim axialen Einführen in die Stützhülse 24 axial in diese eingepresst werden, so dass ein zu einer Selbsthemmung führender Reibschluss bzw. Kraftschluss entsteht. Auch dabei entsteht eine gleichmäßige Flächenpressung an der den Stützstift 26 insbesondere in seinem Hülsen-Verbindungsbereich 28 umgebenden Beschichtung mit Isoliermaterial 40. Alternativ oder zusätzlich kann gemäß den Prinzipien der vorliegenden Erfindung auch bei dieser Ausgestaltungsart einer Abstützeinheit 20 der Kraftschluss durch die vorangehend mit Bezug auf die Ausgestaltungsform der Fig. 1 beschriebene thermische Behandlung der Stützhülse 24 oder/und des Stützstifts 26 erreicht werden.

Mit dem erfindungsgemäßen Aufbau einer Abstützeinheit wird bei baulich einfacher Ausgestaltung mit einer geringen Anzahl an Bauteilen eine mechanisch stabile und gegen thermische und chemische Einflüsse resistente Anbindung eines Heizleiters eines Abgasheizers an eine Trägerstruktur erreicht. Gleichzeitig wird eine zuverlässige elektrische Isolierung zwischen dem Heizleiter und der Trägerstruktur gewährleistet, wobei, angepasst an jeweilige Baugrößen und die elektrischen Ströme, gegen welche eine elektrische Isolierung erforderlich ist, das Material oder/und die Schichtdicke der Beschichtung mit Isoliermaterial ausgewählt werden kann. Gleichzeitig trägt diese Beschichtung aus elektrisch isolierendem Material insbesondere dann, wenn dieses aus einem vergleichsweise schlechten thermischen Leiter, wie z. B. Keramikmaterial, aufgebaut ist, zu einer thermischen Isolierung des Heizleiters bei, so dass die darin generierte Wärme im Wesentlichen nicht auf die Trägerstruktur, sondern primär auf das den Heizleiter umströmende Gas bzw. Abgas übertragen wird. Da das in Form einer Beschichtung aufgebrachte Isoliermaterial durch die den Stützstift umgebende Stützhülse im Wesentlichen vollständig gegen das chemisch aggressive Abgas abgeschirmt ist, besteht nicht die Gefahr, dass durch derartige chemische Einflüsse, ggf. unterstützt durch thermische Belastungen, das Isoliermaterial über die Betriebslebensdauer eines Abgasheizers hinweg beschädigt wird und die Gefahr eines Kurzschlusses zwischen der Stützhülse und dem in dieser aufgenommenen Stützstift auftritt. Dazu trägt auch bei, dass durch den zwischen der Stützhülse und dem Stützstift generierten Kraftschluss das Isoliermaterial einem im Wesentlichen konstanten, über die Fläche desselben gleichmäßig verteilten Anpressdruck unterliegt. Das Eindringen korrosiver Medien in den Zwischenraum zwischen dem Stützstift und der Stützhülse, in welchem im Wesentlichen das Isoliermaterial angeordnet ist, wird somit gleichermaßen zuverlässig vermieden.

## Patentansprüche

1. Abstützeinheit zur Abstützung eines Heizleiters eines Abgasheizers an einer Trägerstruktur, umfassend eine in Richtung einer Längsachse (L) sich erstreckende und die Längsachse (L) umgebende Stützhülse (24), einen Stützstift (26) mit einem in der Stützhülse (24) sich erstreckenden Hülsen-Verbindungsbereich (28) und einem über die Stützhülse (24) hervorstehenden Abgasheizer-Verbindungsbereich (30), wobei der Stützstift (26) wenigstens im Bereich seines Hülsen-Verbindungsbereichs (28) oder/und die Stützhülse (24) an einer den Hülsen-Verbindungsbereich (28) des Stützstifts (26) umgebenden Innenoberfläche (46) mit Isoliermaterial (40) beschichtet ist, und wobei der Hülsen-Verbindungsbereich (28) in der Stützhülse (24) durch Kraftschluss gehalten ist, **dadurch gekennzeichnet, dass** der Kraftschluss durch thermische Behandlung der Stützhülse (24) oder/und des Stützstifts (26) vor Einführen des Hülsen-Verbindungsbereichs (28) in die Stützhülse (24) bereitgestellt ist, wobei vor Einführen des Hülsen-Verbindungsbereichs (28) in die Stützhülse (24) die Stützhülse (24) erwärmt wird oder/und der Stützstift (26) gekühlt wird.

2. Abstützeinheit nach Anspruch 1, **dadurch gekennzeichnet, dass** der Stützstift (26) wenigstens in seinem Hülsen-Verbindungsbereich (28) mit im Wesentlichen zylindrischer Außenumfangskontur ausgebildet ist.

3. Abstützeinheit nach Anspruch 1, **dadurch gekennzeichnet, dass** der Stützstift (26) wenigstens ein seinem Hülsen-Verbindungsbereich (28), vorzugsweise in Richtung vom Abgasheizer-Verbindungsbereich (30) weg, sich, vorzugsweise konisch, verjüngend ausgebildet ist.

4. Abstützeinheit nach einem der Ansprüche 1-3, **dadurch gekennzeichnet, dass** der Kraftschluss durch axiales Einpressen des Hülsen-Verbindungsbereichs (28) in die Stützhülse (24) bereitgestellt ist.

5. Abstützeinheit nach einem der Ansprüche 1-4, **dadurch gekennzeichnet, dass** das Isoliermaterial (40) eine Schichtdicke im Bereich von 0,01 mm bis 0,1 mm aufweist.

6. Abstützeinheit nach einem der Ansprüche 1-5, **dadurch gekennzeichnet, dass** das Isoliermaterial (40) mit Keramikmaterial aufgebaut ist.

7. Abstützeinheit nach einem der Ansprüche 1-6, **dadurch gekennzeichnet, dass** das Isoliermaterial (40) an wenigstens einem axialen Ende (32, 42) der Stützhülse (24) nicht axial über die Stützhülse (24) hervorsteht.

8. Abstützeinheit nach einem der Ansprüche 1-7, **dadurch gekennzeichnet, dass** das Isoliermaterial (40) wenigstens an einem dem Abgasheizer-Verbindungsbereich (30) zugewandten axialen Ende (42) der Stützhülse (24) axial über die Stützhülse (24) hervorsteht.

9. Abstützeinheit nach einem der Ansprüche 1-8, **dadurch gekennzeichnet, dass** der Stützstift (26) und die Stützhülse (24) mit Metallmaterial aufgebaut sind.

10. Verfahren zur Herstellung einer Abstützeinheit (20) zur Abstützung eines Heizleiters eines Abgasheizers an einer Trägerstruktur, die Abstützeinheit (20) umfassend eine in Richtung einer Längsachse (L) sich erstreckende und die Längsachse (L) umgebende Stützhülse (24), einen Stützstift (26) mit einem in der Stützhülse (24) sich erstreckenden Hülsen-Verbindungsbereich (28) und einem über die Stützhülse (24) hervorstehenden Abgasheizer-Verbindungsbereich (30), wobei der Stützstift (26) wenigstens im Bereich seines Hülsen-Verbindungsbereichs (28) oder/und die Stützhülse (24) an einer den Hülsen-Verbindungsbereich (28) des Stützstifts (26) umgebenden Innenoberfläche (46) mit Isoliermaterial (40) beschichtet ist, und wobei der Hülsen-Verbindungsbereich (28) in der Stützhülse (24) durch Kraftschluss gehalten ist, wobei zur kraftschlüssigen Verbindung der Stützhülse (24) mit dem Stützstift (26) vor dem Einführen des Hülsen-Verbindungsbereichs (28) in die Stützhülse (24) die Stützhülse (24) erwärmt wird oder/und der Stützstift (26) gekühlt wird.

11. Verfahren nach Anspruch 10, **dadurch gekennzeichnet, dass** die Stützhülse (24) auf eine Temperatur über einer an einem Abgasheizer (14) maximal auftretenden oberen Grenztemperatur erwärmt wird oder/und der Stützstift (26) auf eine Temperatur unter einer an einem Abgasheizer (14) maximal auftretenden unteren Grenztemperatur gekühlt wird.

12. Abgasheizer für eine Abgasanlage einer Brennkraftmaschine, umfassend eine Trägerstruktur (14) und wenigstens einen vermittels wenigstens einer Abstützeinheit (20) nach einem der Ansprüche 1-9 an der Trägerstruktur (14) getragenen Heizleiter (18).

13. Abgasheizer nach Anspruch 12, **dadurch gekennzeichnet, dass** die wenigstens eine Abstützeinheit (20), vorzugsweise mit ihrer Stützhülse (24), an der Trägerstruktur (14) materialschlüssig, vorzugsweise durch Verschweißen, festgelegt ist und, vorzugsweise mit ihrem Stützstift (26), an dem wenigstens einen Heizleiter (18) materialschlüssig, vorzugsweise durch Verschweißen, festgelegt ist.

14. Abgasanlage für eine Brennkraftmaschine, umfassend wenigstens einen Abgasheizer (14) nach Anspruch 12 oder 13.

## Claims

1. A support unit for supporting a heating conductor of an exhaust gas heater on a carrier structure, comprising a supporting sleeve (24) extending in the direction of a longitudinal axis (L) and surrounding the longitudinal axis (L), a supporting pin (26) having a sleeve connecting area (28) extending in the supporting sleeve (24) and an exhaust gas heater connecting area (30) projecting beyond the supporting sleeve (24), wherein the supporting pin (26), at least in the area of its sleeve connecting area (28), and/or the supporting sleeve (24), on an inner surface (46) surrounding the sleeve connecting area (28) of the supporting pin (26), is coated with insulating material (40), and wherein the sleeve connecting area (28) is held in the supporting sleeve (24) by a force fit, **characterized in that** the force fit is provided by thermal treatment of the supporting sleeve (24) and/or of the supporting pin (26) before insertion of the sleeve connecting area (28) into the supporting sleeve (24), wherein the supporting sleeve (24) is heated and/or the supporting pin (26) is cooled before insertion of the sleeve connecting area (28) into the supporting sleeve (24).

2. The support unit as claimed in claim 1, **characterized in that** the supporting pin (26) is formed with a substantially cylindrical outer circumferential contour, at least in its sleeve connecting area (28).

3. The support unit as claimed in claim 1, **characterized in that** the supporting pin (26), at least in its sleeve connecting area (28), is designed to taper, preferably conically, preferably in the direction away from the exhaust gas heater connecting area (30).

4. The support unit as claimed in one of claims 1-3, **characterized in that** the force fit is provided by axially pressing the sleeve connecting area (28) into the supporting sleeve (24).

5. The support unit as claimed in one of claims 1-4, **characterized in that** the insulating material (40) has a layer thickness in the range from 0.01 mm to 0.1 mm.

6. The support unit as claimed in one of claims 1-5, **characterized in that** the insulating material (40) is formed with ceramic material.

7. The support unit as claimed in one of claims 1-6, **characterized in that** the insulating material (40) does not project axially beyond the supporting sleeve (24) at at least one axial end (32, 42) of the supporting sleeve (24).

8. The support unit as claimed in one of claims 1-7, **characterized in that** the insulating material (40) projects axially beyond the supporting sleeve (24), at least at an axial end (42) of the supporting sleeve (24) that faces the exhaust gas heater connecting area (30).

9. The support unit as claimed in one of claims 1-8, **characterized in that** the supporting pin (26) and the supporting sleeve (24) are made with metallic material.

10. A method for producing a support unit (20) for supporting a conductor of an exhaust gas heater on a carrier structure , wherein the support unit (20) comprises a supporting sleeve (24) extending in the direction of a longitudinal axis (L) and surrounding the longitudinal axis (L), a supporting pin (26) having a sleeve connecting area (28) extending in the supporting sleeve (24) and an exhaust gas heater connecting area (30) projecting beyond the supporting sleeve (24), wherein the supporting pin (26), at least in the area of its sleeve connecting area (28), and/or the supporting sleeve (24), on an inner surface (46) surrounding the sleeve connecting area (28) of the supporting pin (26), is coated with insulating material (40), and wherein the sleeve connecting area (28) is held in the supporting sleeve (24) by a force fit, wherein, for the force-fitting connection of the supporting sleeve (24) to the supporting pin (26), the supporting sleeve (24) is heated and/or the supporting pin (26) is cooled before the insertion of the sleeve connecting area (28) into the supporting sleeve (24).

11. The method as claimed in claim 10, **characterized in that** the supporting sleeve (24) is heated to a temperature above an upper limiting temperature that occurs at most on an exhaust gas heater (14) and/or the supporting pin (26) is cooled to a temperature below a lower limiting temperature that occurs at most on an exhaust gas heater (14).

12. An exhaust gas heater for an exhaust gas system of an internal combustion engine, comprising a carrier structure (14) and at least one heating conductor (18) carried on the carrier structure (14) by means of at least one support unit (20) as claimed in one of claims 1-9.

13. The exhaust gas heater as claimed in claim 12, **characterized in that** the at least one support unit (20) is fastened to the carrier structure (14), preferably by its supporting sleeve (24), by material bonding, preferably by welding, and is preferably fastened to the at least one heating conductor (18) by its supporting pin (26), by material bonding, preferably by welding.

14. An exhaust gas system for an internal combustion engine, comprising at least one exhaust gas heater (14) as claimed in claim 12 or 13.

## Revendications

1. Une unité de support pour supporter un conducteur chauffant d'un réchauffeur de gaz d'échappement sur une structure de support, comprenant un manchon de support (24) s'étendant dans la direction d'un axe longitudinal (L) et entourant l'axe longitudinal (L), une tige de support (26) ayant une zone de raccordement de manchon (28) s'étendant dans le manchon de support (24) et une zone de raccordement de réchauffeur de gaz d'échappement (30) faisant saillie au-delà du manchon de support (24), dans lequel la tige de support (26), au moins dans la zone de sa zone de raccordement de manchon (28), et/ou le manchon de support (24), sur une surface intérieure (46) entourant la zone de raccordement de manchon (28) de la tige de support (26), est revêtu d'un matériau isolant (40), et dans lequel la zone de raccordement de manchon (28) est maintenue dans le manchon de support (24) par un ajustement serré, **caractérisé en ce que** l'ajustement serré est obtenu par traitement thermique du manchon de support (24) et/ou de la tige de support (26) avant l'insertion de la zone de raccordement de manchon (28) dans le manchon de support (24), dans lequel le manchon de support (24) est chauffé et/ou la tige de support (26) est refroidie avant l'insertion de la zone de raccordement de manchon (28) dans le manchon de support (24).

2. L'unité de support selon la revendication 1, **caractérisée en ce que** la tige de support (26) est formée avec un contour circonférentiel extérieur sensiblement cylindrique, au moins dans sa zone de raccordement de manchon (28).

3. L'unité de support selon la revendication 1, **caractérisée en ce que** la tige de support (26), au moins dans sa zone de raccordement de manchon (28), est conçue pour s'effiler, de préférence de manière conique, de préférence dans la direction opposée à la zone de raccordement du réchauffeur de gaz d'échappement (30).

4. L'unité de support selon l'une des revendications 1 à 3, **caractérisée en ce que** l'ajustement serré est obtenu en pressant axialement la zone de raccordement de manchon (28) dans le manchon de support (24).

5. L'unité de support selon l'une des revendications 1 à 4, **caractérisée en ce que** le matériau isolant (40) a une épaisseur de couche comprise entre 0,01 mm et 0,1 mm.

6. L'unité de support selon l'une des revendications 1 à 5, **caractérisée en ce que** le matériau isolant (40) est formé d'un matériau céramique.

7. L'unité de support selon l'une des revendications 1 à 6, **caractérisée en ce que** le matériau isolant (40) ne dépasse pas axialement du manchon de support (24) à au moins une extrémité axiale (32, 42) du manchon de support (24).

8. L'unité de support selon l'une des revendications 1 à 7, **caractérisée en ce que** le matériau isolant (40) dépasse axialement du manchon de support (24), au moins à une extrémité axiale (42) du manchon de support (24) qui fait face à la zone de raccordement du réchauffeur de gaz d'échappement (30).

9. L'unité de support selon l'une des revendications 1 à 8, **caractérisée en ce que** la tige de support (26) et le manchon de support (24) sont fabriqués en matériau métallique.

10. Un procédé de fabrication d'une unité de support (20) destinée à supporter un conducteur d'un réchauffeur de gaz d'échappement sur une structure de support, dans lequel l'unité de support (20) comprend un manchon de support (24) s'étendant dans la direction d'un axe longitudinal (L) et entourant l'axe longitudinal (L), une tige de support (26) ayant une zone de raccordement de manchon (28) s'étendant dans le manchon de support (24) et une zone de raccordement de chauffage de gaz d'échappement (30) faisant saillie au-delà du manchon de support (24), dans lequel la tige de support (26), au moins dans la zone de sa zone de raccordement de manchon (28), et/ou le manchon de support (24), sur une surface intérieure (46) entourant la zone de raccordement de manchon (28) de la tige de support (26), est revêtu d'un matériau isolant (40), et dans lequel la zone de raccordement de manchon (28) est maintenue dans le manchon de support (24) par un ajustement serré, dans lequel, pour la connexion par ajustement serré du manchon de support (24) à la tige de support (26), le manchon de support (24) est chauffé et/ou la tige de support (26) est refroidie avant l'insertion de la zone de raccordement de manchon (28) dans le manchon de support (24).

11. Le procédé selon la revendication 10, **caractérisé en ce que** le manchon de support (24) est chauffé à une température supérieure à une température limite supérieure qui se produit au maximum sur un réchauffeur de gaz d'échappement (14) et/ou la tige de support (26) est refroidie à une température inférieure à une température limite inférieure qui se produit au maximum sur un réchauffeur de gaz d'échappement (14).

12. Un réchauffeur de gaz d'échappement pour un système de gaz d'échappement d'un moteur à combustion interne, comprenant une structure de support (14) et au moins un conducteur chauffant (18) porté sur la structure de support (14) au moyen d'au moins une unité de support (20) selon l'une des revendications 1 à 9.

13. Le rechauffeur de gaz d'échappement selon la revendication 12, **caractérisé en ce que** ladite au moins une unité de support (20) est fixée à la structure de support (14), de préférence par son manchon de support (24), par liaison de matière, de préférence par soudage, et est de préférence fixée au au moins un conducteur chauffant (18) par sa tige de support (26), par liaison de matière, de préférence par soudage.

14. Un système d'échappement pour un moteur à combustion interne, comprenant au moins un réchauffeur de gaz d'échappement (14) selon la revendication 12 ou 13.
